# EUROPEAN PATENT SPECIFICATION

(11) **EP 3 890 653 B1**
(45) Date of publication and mention of the grant of the patent: **01.01.2025**
(21) Application number: 19813149.2
(22) Date of filing: 22.11.2019
(51) Int. Cl.: A61C 9/00, A61C 5/62

(54) **DISPENSING DEVICE FOR DENTAL RETRACTION MATERIAL AND METHOD OF PREPARING A DISPENSING DEVICE**
SPENDEVORRICHTUNG FÜR DENTALES RETRAKTIONSMATERIAL UND VERFAHREN ZUR HERSTELLUNG EINER SPENDEVORRICHTUNG
DISPOSITIF DE DISTRIBUTION DE MATÉRIAU DE RÉTRACTION DENTAIRE ET MÉTHODE DE PRÉPARATION D'UN DISPOSITIF DE DISTRIBUTION

(30) Priority: 03.12.2018 EP 18209722
(43) Date of publication of application: 13.10.2021
(73) Proprietor: Solventum Intellectual Properties Company, Maplewood, MN 55144 (US)
(72) Inventor: PAUSER, Helmut, 82229 Seefeld (DE)
(74) Representative: Vossius & Partner Patentanwälte Rechtsanwälte mbB
(86) International application number: PCT/IB2019/060073
(87) International publication number: WO 2020/115601

(56) References cited:
- EP-A1- 2 233 105
- EP-A1- 2 818 133
- WO-A1-2013/176870
- WO-A1-2013/176870
- WO-A2-2009/151983
- GB-A- 2 490 365
- JP-U- H0 237 608

## Description

### Field of the Invention

The invention relates to a dispensing device for dental retraction material and in particular to a dispensing device that has a cannula formed of two differently shaped cannula portions, one of which being separable from the cannula to convert the dispensing device for use with the remaining cannula portion.

### Background Art

The restoration of a patient's tooth or teeth often includes the replacement of a natural tooth by a dental restoration or dental prosthesis. Typically a tooth that is to be restored is first prepared by a dentist, for example abraded or ground to an appropriate shape to remove undesired tooth substance, and to provide the tooth with a shape appropriate to receive the dental restoration.

The dental restoration is typically mated precisely with the remaining tooth shape prepared by the dentist on the basis of an impression of the prepared tooth. Therefore the dental impression should be precise, and should represent all tooth structure required to determine the shape of the mating surface of the later dental restoration. In particular the dental impression should represent the transition or the "margin" between the shape prepared in a tooth and the natural tooth shape. For dental restorations that extend below a patient's gingiva (or gums) the dentist also should make the part of the margin accessible for the dental impression that would normally be covered by the gingiva. The procedure of displacing the gingiva from the tooth to make the margin accessible is also known as "gingival retraction" in the field of dentistry. A common gingival retraction procedure includes the insertion of a so called retraction cord in the gingival sulcus.

One known method of gingival retraction includes the use of so-called gingival retraction pastes or dental retraction pastes. Dental retraction pastes are very high viscosity pastes which are typically squeezed directly into a patient's gingival sulcus by means of a dispensing syringe that has a cannula suitable for insertion into the sulcus.

For example WO 2009/151983 A2 discloses a device for use in retracting a gingiva from a human tooth by widening a gingival sulcus with a dental composition. The device comprises a cannula with a free end having an opening for dispensing the dental composition. The free end is shaped to be inserted with its front in the entry of the gingival sulcus, and to laterally displace the gingiva from the tooth as the cannula is moved in the gingival sulcus.

WO 2013/176870 A1 discloses an application tip for dispensing a dental material that has a tubular dispensing end made of a plastic material. The dispensing end being formed of a circumferential wall having a thickness T₁ and which forms a dispensing opening of a diameter Dᵢ₁ and having a diameter-to-thickness-ratio Dᵢ₁ : T₁ at the opening which is 13 or greater. The wall thickness increases in a direction away from the opening.

Although existing devices provide for certain advantages there is still a need for a device supporting a convenient and effective gingival retraction procedure. It is further desirable to provide a gingival retraction device and composition that are rather inexpensive and easy to use.

### Summary of the Invention

The invention is defined by the features of the independent claims.

The invention relates to a dispensing device for dental retraction material and to a method of preparing a dispensing device.

The dispensing device comprises a cannula that forms a free front end. The free front end is formed by a first cannula portion of the cannula. The first cannula portion extends from the free front end to a second cannula portion of the cannula. The second cannula portion is arranged directly adjacent the first cannula portion. Further, the first cannula portion has a first elongated section and a first rounded section. The first rounded section extends between the first elongated section and the free front end. A first outer diameter (D1) of the cannula is defined on the first rounded section at the free front end. Furthermore, the second cannula portion has a second elongated section and a second rounded section. The second rounded section extends between the second elongated section and the first cannula portion. A second outer diameter (D2) of the cannula is defined on the second rounded section at the transition between the second rounded section and the first cannula portion. The second outer diameter is greater than the first outer diameter. The first cannula portion further comprises a predetermined separation structure directly adjacent the second cannula portion. The cannula preferably extends along a longitudinal axis.

The dispensing device the first cannula portion is separable from the cannula to convert the dispensing device for use with the second cannula portion.

The invention is advantageous in that it allows the dispensing device to be adapted to a particular clinical situation in a patient's mouth. In particular, the invention allows the diameter of the cannula to be adapted to the size of the patient's sulcus. Accordingly the same dispensing device can be used for a patient having a narrow sulcus as well as for a patient having a wider sulcus. Further the dispensing device can be converted during a dental retraction procedure. For example after the dispensing device was used for beginning the dental retraction procedure the device may be converted by breaking or cutting off the first cannula portion, and the same dispensing device (but just converted) can be used for continuing the dental retraction procedure. Therefore the dispensing device is suitable for a dental retraction procedure on a sulcus having narrower and wider portions. Further, the invention is advantageous in that it minimizes a force (also referred to "extrusion force" in the field of dental dispensing devices) that is needed for extruding (or expelling) the dental retraction material. It has been found that the dental retraction material due to solid contents or poor flowable contents tends to block within the cannula with its typically relatively narrow channel extending therethrough. A stepped configuration of the channel provided by multiple differently sized cylindrical sections provides for a minimized extrusion force.

The predetermined separation structure forms a predetermined breaking line at which the first cannula portion breaks off. For example, in a situation in which a buckling or bending load is exerted between the first and second cannula portion, the first cannula portion typically breaks off at predetermined breaking line. Further, the predetermined separation structure visually indicates a cutting position at which a cutting tool (for example a knife or scalpel) can be positioned on the cannula for cutting off the first cannula portion. Further, the predetermined separation structure may be shaped for guiding the cutting tool toward a cutting position on the cannula.

The predetermined separation structure has a groove, preferably an annular groove. The groove may be rectangular, U-shaped or V-shaped.
In one embodiment the first elongated section may have a tapered shape. For example the first elongated section may be conical, or composed of at least one conical structure and another structure (for example a cylindrical structure). Further, the second elongated section may have a tapered shape. For example the second elongated section may be conical, or composed of at least one conical structure and another structure (for example a cylindrical structure).

In one embodiment the first outer diameter is within a range of 0.5 mm to 0.8 mm and the second outer diameter is within a range of 0.8 mm to 1.0 mm. Preferably, although the first outer diameter and the second outer diameter may have any dimension within the respective specified ranges, the first and second outer diameter, in combination, are preferably always different.

In one embodiment a third outer diameter (D3) of the cannula is defined on the first elongated section at the transition between the first rounded section and the first elongated section. Further, a fourth outer diameter (D4) of the cannula is defined on the second elongated section at the transition between the second rounded section and the second elongated section. The third outer diameter may be within a range of 1.0 mm to 1.5 mm and the fourth outer diameter may be within a range of 1.5 mm to 2.0 mm. Preferably, although the third outer diameter and the fourth outer diameter may have any dimension within the respective specified ranges, the third and fourth outer diameter, in combination, are preferably always different.

In one embodiment the first rounded section is based on a radius within a range of 0.5 mm to 10 mm (preferably 8 mm or about 8 mm) and the second rounded section is based on a radius within a range of 0.5 to 10 (preferably 8 mm or about 8 mm). Each radius is preferably measured in a plane defined on (congruent with) the longitudinal axis. This means that the longitudinal axis extends on that plane. Preferably, although the radius of the first rounded section and the radius of the second rounded section may have any dimension within the respective specified ranges, the radius of the first rounded section and the radius of the second rounded section, in combination, are preferably always different.

A channel extends through the cannula. The channel forms a dispensing opening at the free front end. The channel comprises a first channel section that has a first cylindrical channel section and a second channel section that has a second cylindrical channel section. The first channel section extends between the dispensing opening and the second channel section. Further, the first cylindrical channel section has a first channel diameter and the second cylindrical channel section has a second channel diameter. The first channel diameter is smaller than the second channel diameter. Preferably, the first channel diameter is within a range of 0.5 mm to 0.8 mm and the second channel diameter is within a range of 0.8 mm to 1.0 mm.

In one embodiment the second channel section comprises a third cylindrical channel section having a third channel diameter that is greater than the second channel diameter. The third channel diameter is within a range of 1.0 mm to 1.5 mm. Preferably, although the first, second and third channel diameter may have any dimension within the respective specified ranges, the first, second and third channel diameter, in combination, are preferably always different. Generally, the channel may have a stepped configuration formed of a plurality of differently sized channel sections. It has been found that with a stepped configuration the dental retraction material is hindered in blocking within the channel.

In one embodiment the dispensing device further comprises a chamber for storing the dental retraction material. The chamber is in fluid communication with the cannula and in particular with the channel through the cannula. The dispensing device may further have a piston for expelling the dental retraction material from the dispensing device. The chamber may be formed by a container of the dispensing device. The piston may be displaceably received within the container. Further, the piston may seal the chamber at a rear end of the dispensing device. A front end of the dispensing device may be formed by the free front end. A cap may be provided for sealing the front end of the dispensing device. The cap and the piston in combination thus preferably hermetically seal the dental retraction material within the chamber. In one embodiment the dispensing device further comprising the dental retraction material.

The dental retraction material may comprise a liquid and a silicate filler. The group of silicate minerals typically includes, inter alia, silicon dioxides (also named silica), quartz, and phyllosilicates. Alternatively the dental retraction material may comprise a liquid and a combination of at least two different phyllosilicates.

"Phyllosilicates" are silicates forming sheets of silicate tetrahedra with Si₂O₅. Phyllosilicates can be further divided in sub-groups, e.g. according to the number of sheets or layers arranged with each other. Phyllosilicates are divided for purposes of the present invention into the following subgroups: silicate minerals of the 2:1 layer type group and silicate minerals of the 1:1 layer type group. With respect to this classification a more detailed description can be found in Ullmanns Encyclopedia of Industrial Chemistry (Wiley-VCH), 2005, Silicates; table 4. According to this reference, clay minerals belong to the group of phyllosilicates and can be characterized by the number of layers linked or arranged with each other. This classification is also used with respect to the present invention. For example in kaolinite, having the ideal formula Al₂[Si₂O₅(OH)₄]), two single layers are linked or arranged with each other. For example in muscovite, having the ideal formula KAl₂(AlSi₃O₁₀)(OH)₂ and belonging to the Mica type group of minerals, three layers are linked or arranged with each other.

The combination of phyllosilicates may comprise a layer type 1:1 silicate mineral and a layer type 2:1 silicate mineral in a certain ratio relative to each other. Phyllosilicates from the layer type 1:1 silicate mineral which can be used include kaolinite, lizardite and mixtures or combinations thereof, wherein kaolinite is preferred. Phyllosilicates from the layer type 2:1 silicate minerals which can be used include talc-pyrophyllite type minerals, smectite type minerals, vermiculite type minerals, illites type minerals, mica type minerals and mixtures and combinations thereof. Specific examples include talc, willemseite, pyrophyllite, stevensite, saponite (from the talc-pyrophyllite type group of minerals), sponite, sauconite, hectorite, montmorillonite, beidellite, nontronite, volkonskite (from the smectite type group of minerals), phlogopite, biotite, lepidolite, muscovite, illite, glauconite, celadonite (from the mica type group of minerals).

The layer type 1:1 silicate mineral and the layer type 2:1 silicate mineral are typically present in the dental retraction material in a certain weight ratio with respect to each other. This weight ratio includes a range from about 50/50 to about 5/95 or from about 30/70 to about 10/90. That is, the content of the layer type 1:1 silicate mineral and the content of the layer type 2:1 silicate mineral in the dental retraction material can be about equal. It is, however, also within the scope of the invention that the layer type 2:1 silicate mineral is present in excess compared to the layer type 1:1 silicate mineral. If the ratio is within the above mentioned ranges, the resulting dental retraction material is advantageous in that it tends to require a low extrusion force, but may have a relative good storage modulus. Further such a dental retraction material may be removable from a patient's mouth relatively quickly, for example by rinsing with water.

Liquids suitable for preparing the dental retraction material include those which are generally able to form a paste or gel with the other components present. In particular the liquids may include polar and non-polar liquids and mixtures thereof. Specific examples include water, alcohols (e.g. ethanol, n- and iso-propanol, erythritols), ketons (e.g. acetone), glycerine (e.g. ethoxylated glycerin), glycols (e.g. ethyleneglycol, propyleneglycol and/or its oligo or mixed oligomers) and silicon oils.

The dental retraction material may further comprise one or more astringents (sometimes also referred to as haemostatic agent). Astringent(s) that may be useful in assisting haemostasis include, but are not limited to oxides, chloride or sulphate salts of ferrum (e.g. ferric sulfate, ferric subsulfate, ferric chloride), aluminium (e.g. potassium aluminum sulfate, aluminum ammonium sulfate, aluminum sulfate, aluminum chlorohydrate, aluminum acetate) and zinc, polyphenols, ellag acid, permanganates (e.g. potassium permanganate), potassioum ferrate (IV), silver nitrate and hydrogen peroxide, epinephrine and mixtures thereof. One preferred class of haemostatics include aluminum compounds. The dental retraction material may further comprise one or more additives. Additives, which can be present in the dental retraction material, include colorants, pharmaceutical drugs, anti-microbial agents, anti-evaporation agents, rheology modifiers, flavoring agents, preserving agents, surfactants, pH buffering agent and mixtures and combinations thereof.

A typical dental retraction material may have the following formulation:
- liquid in an amount from about 15 wt.- % to about 30 wt.-%.
- a phyllosilicate e.g. a type 2:1 silicate mineral or a type 1:1 silicate material in an amount from about 50 wt.-% to about 70 wt.-% .
- an astringent in an amount from about 10 wt.-% to about 20 wt.-%.
- other additives in an amount up to about 10 wt.-%.

Another typical dental retraction material may have the following formulation:
- liquid in an amount from about 15 wt.- % to about 50 wt.-% or from about 16 wt.-% to about 40 wt.-% or from about 17 wt.-% to about 30 wt.-%.
- layer type 1:1 silicate mineral in an amount from about 1 wt.-% to about 34 wt.-% or from about 2 wt.-% to about 30 wt.% or from about 2.5 wt.-% to about 25 wt.-%.
- the layer type 2:1 silicate mineral in an amount from about 30 wt.-% to about 65 wt.-% or from about 31 wt.-% to about 64 wt.-% or from about 32 wt.-% to about 63 wt.-%.
- astringent in an amount from about 0.01wt.-% to about 30 wt.-% or from about 5 wt.-% to about 20 wt.-% or from about 10 wt.-% to about 15 wt.-%.
- additives in an amount from about 0.0001 wt.-% to about 10 wt.-% or from about 1 wt.-% to about 7 wt.-% or from about 2 wt.-% to about 5 wt.-%.

In a further embodiment the dispensing device may be made from a plastic material, for example by injection molding. In particular the container and the cannula are preferably monolithically formed by a plastic material selected from among polyethylenne (PE), polypropylene (PP) and (PBT), preferably polybutylene terephthalate (PBT).

The piston may be made of a plastic material selected from among polyethylene (PE), polypropylene (PP) and (PBT), preferably polybutylene terephthalate (PBT), preferably polypropylene (PP). And the cap may be made of a plastic material selected from among polyethylene (PE), polypropylene (PP) and (PBT), preferably polybutylene terephthalate (PBT), preferably polypropylene (PP).

The dispensing device is preferably configured for use with a dental capsule applier. Therefore the container may have an outer annular bulge for retaining the dispensing device in the dental capsule applier.

In a further aspect the invention relates to a method of preparing a dispensing device for dental retraction material for use. The method excludes any steps for treatment of the human or animal body. The dispensing device is configured as disclosed herein and particularly has a first and a second cannula portion. The method comprises the steps of:
- providing the dispensing device; and
- separating the first cannula portion by breaking or cutting the first cannula portion off from the cannula directly adjacent the second cannula portion.

Before the breaking or cutting step the first cannula portion preferably forms a first front most diameter that corresponds to the first outer diameter of the dispensing device. By breaking or cutting the first cannula portion off from the cannula, the dispensing device is provided with a different second front most diameter that corresponds to the (greater) second outer diameter. Therefore the dispensing device can be adapted to different clinical situations.

### Brief Description of the Figures

- Fig. 1: is a perspective view of a dispensing device according to an embodiment of the invention;
- Fig. 2: is a cross-sectional view of a cannula of the dispensing device shown in Fig. 1;
- Fig. 3: is a perspective view of the cannula of the dispensing device shown in Fig. 1;
- Fig. 4: is a perspective cross-sectional view of the cannula of the dispensing device shown in Fig. 1; and
- Fig. 5: is a perspective view of the cannula of the dispensing device shown in Fig. 1 with a cutting tool positioned relative to the cannula.

### Detailed Description of the Invention

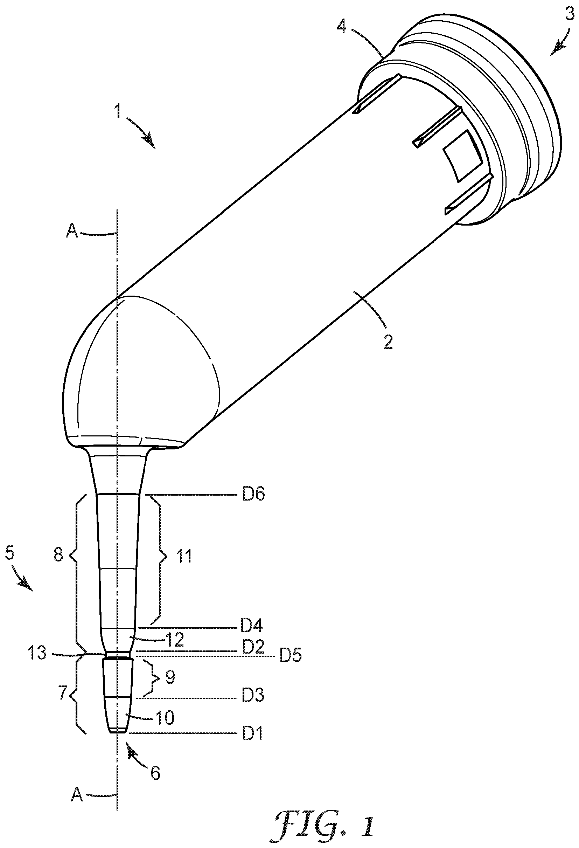

Fig. 1 shows an exemplary dispensing device 1 according to the invention. The dispensing device 1 has a container 2 in which a dental retraction material is stored. A piston 3 (not visible) closes the container 2. The container 2 forms a chamber (not visible) in which the dental retraction material is or can be stored. The piston 3 further is movable within the container for expelling the dental retraction material from the dispensing device 1. For expelling the dental retraction material the dispensing device 1 can be retained in a dispensing gun (not shown). The dispensing device 1 has an annular rim 4 for retaining the dispensing device 1 during dispensation of the dental retraction material.

The dispensing device 1 further comprises a cannula 5. The cannula 5 extends along a longitudinal axis A. The cannula 5 has a free front end 6. The cannula 5 particularly is shaped such that it is insertable within the sulcus of a human gums in a patient's mouth. Therefore the free front end 6 of the cannula 5 has a rounded shape without any sharp edges. The free front end 6 is in particular formed by a first cannula portion 7 that extends from the free front 6 end to a second cannula portion 8. The second cannula portion 8 is arranged directly adjacent the first cannula portion 7. Further, the first and second cannula portion 7, 8 are monolithically formed, preferably by injection molding from a plastic material, for example from polybutylene terephthalate (PBT). The first cannula portion 7 has a first elongated section 9 and a first rounded section 10. The first rounded section 10 extends between the first elongated section 9 and the free front end 6. The first rounded section 10 particularly extends over the entire distance between the first elongated section 9 and the free front end 6. The first rounded section 10 in the example is based on a radius of 8 mm. The radius is defined in a plane on the longitudinal axis A. A first outer diameter D1 of the cannula 5 is defined at the free front end 6. The first outer diameter D1 also forms a front most outer diameter. Further, the first outer diameter D1 is defined in a plane that is perpendicular to the longitudinal axis.

The second cannula portion 8 has a second elongated section 11 and a second rounded section 12. The second rounded section 12 extends between the second elongated section 11 and the first cannula portion 7. A second outer diameter D2 of the cannula 5 is defined on the second rounded section 12 at the transition between the second rounded section 12 and the first cannula portion 7. The second outer diameter D2 is defined in a plane that is perpendicular to the longitudinal axis.

Accordingly, the cannula 5 can be broken or cut at the second outer diameter D2 to provide the cannula 5 with a new front most diameter than is increased with respect to the first outer diameter D1. Therefore the cannula 5 is configured for being provided with different front most outer diameters. This helps a dentist to adapt the dispensing device to different clinical situations in a patient's mouth.

A third outer diameter D3 of the cannula 5 is defined on the first elongated section 9 at the transition between the first rounded section 10 and the first elongated section 9. A rear end of the first rounded section 10 therefore also has the third outer diameter D3. The third outer diameter D3 is greater than the first outer diameter D1. And (in the example) the third outer diameter D3 is greater than the second outer diameter D2. Further, a fourth outer diameter D4 of the cannula 5 is defined on the second elongated section 11 at the transition between the second rounded section 12 and the second elongated section 11. The fourth outer diameter D4 is greater than the second outer diameter D2.

The first elongated section 9 in the example comprises a conical section between the third outer diameter D3 and a fifth outer diameter D5. The fifth outer diameter D5 is greater than the third outer diameter D3. Accordingly, the conical section of the first elongated section 9 widens from the third outer diameter D3 toward the fifth outer diameter D5. The first cannula portion 7 comprises a predetermined separation structure 13 directly adjacent the second cannula portion 8. In particular, the first elongated section 9 comprises the conical section and additionally the predetermined separation structure 13. The predetermined separation structure 13 is formed by an annular constriction with respect to the conical section of the first elongated section 9, in particular with respect to the fifth outer diameter D5. Further, the predetermined separation structure 13 is arranged between the second rounded section 12 and the conical section of the first elongated section 9. In the example the predetermined separation structure 13 is a groove that has the second outer diameter D2 at the transition between the first and second cannula portion 7, 8. The predetermined separation structure 13 can weaken the first cannula portion so that it preferably breaks at the predetermined separation structure 13. Or the predetermined separation structure can be used for guiding a cutting tool (for example a scalpel) during cutting off the first cannula portion 7.

The second elongated section 11 in the example also comprises a conical section between the fourth outer diameter D4 and a sixth outer diameter D6. The sixth outer diameter D6 is greater than the fourth outer diameter D4. Accordingly, the conical section of the second elongated section 11 widens from the fourth outer diameter D4 toward the sixth outer diameter D6. In the example the cannula 5 only has two cannula portions (the first and second cannula portion 7, 8). Therefore the second elongated section 11 does not comprise a further predetermined separation structure. However, in another example the cannula may have three (or more) cannula portions with the second (and further) elongated section comprising (a) further predetermined separation structure(s).

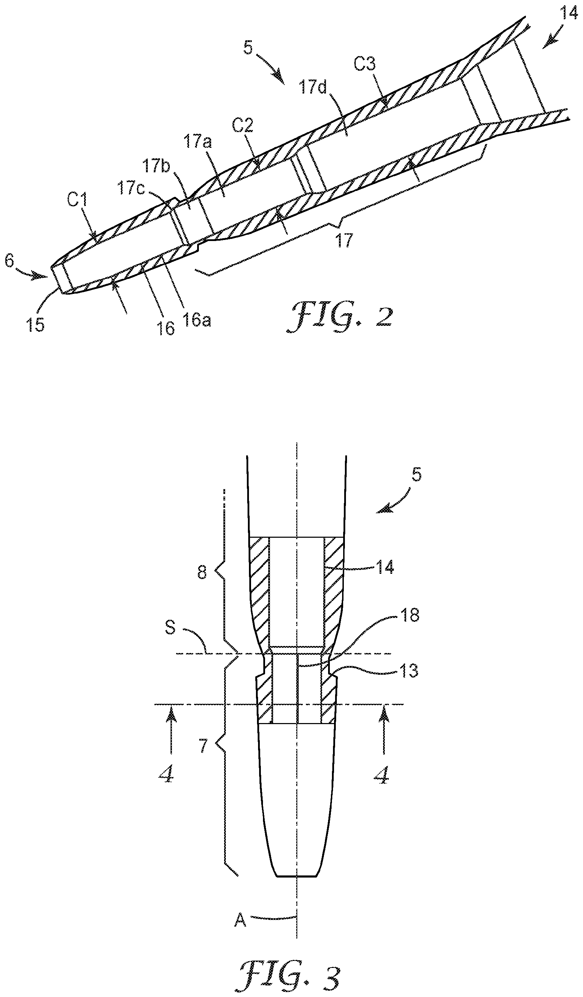

Fig. 2 shows a cross-section of the cannula 5. In particular, the cannula 5 comprises a channel 14. The channel 14 extends from the chamber (not shown) through the cannula 5 and forms a dispensing opening 15 at the free front end 6 of the cannula 5. Thus, the chamber (in which the dental retraction material may be stored) is in fluid communication with the channel 14. For keeping the dental retraction material encapsulated within the chamber a cap (not shown) can be placed over the free front end 6 of the cannula 5 to close the dispensing opening 15.

The channel 14 has a stepped configuration formed of a plurality of cylindrical channel sections (instead of a conical or non-stepped cylindrical configuration). It has been found that the dental retraction material tends to block if it is urged through a conical channel and that this tendency is minimized if a stepped configuration of a plurality of cylindrical channel sections are used instead.

In particular, the channel 14 comprises a first channel section 16 and a second channel section 17. The first channel section 16 corresponds to a first cylindrical channel section 16a. In the example the second channel section 17 comprises a second cylindrical channel section 17a, a conical channel section 17b and a chamfer 17c. The conical channel section 17b is provided to account for a sufficient wall thickness between an inner surface of the channel 14 and an outer surface of the cannula 5. The skilled person will however recognize that the conical channel section 17b is optional. Further, it has been found that in combination with the second cylindrical channel section 17a the tendency of the dental retraction material to block is still lower than for a channel that is conical only.

The first channel section 16 extends between the dispensing opening 15 (or the free front end 6) and the second channel section 17. The first cylindrical channel section 16a has a first channel diameter C1 and the second cylindrical channel section 17a has a second channel diameter C2. The first channel diameter C1 is smaller than the second channel diameter C2. Further, the dispensing opening 15 corresponds in its diameter to the first channel diameter C1. The second channel section 17 further comprises a third cylindrical channel section 17d having a third channel diameter C3 that is greater than the second channel diameter C2.

Fig. 3 shows a portion of the cannula 5 with the predetermined separation structure 13 in further detail. The predetermined separation structure 13 in the example is an annular groove within the first cannula portion 7. The groove weakens the first cannula portion so that it preferably breaks along the groove. The groove can further be used for positioning a separation tool (for example a knife or scalpel) directly adjacent the second cannula portion 8. Once positioned, the separation tool may be used for cutting the first cannula portion 7 off from the cannula 5. A separation line S along which the cutting may be performed is indicated in the Figure. The separation line S extends transverse to the longitudinal axis A.

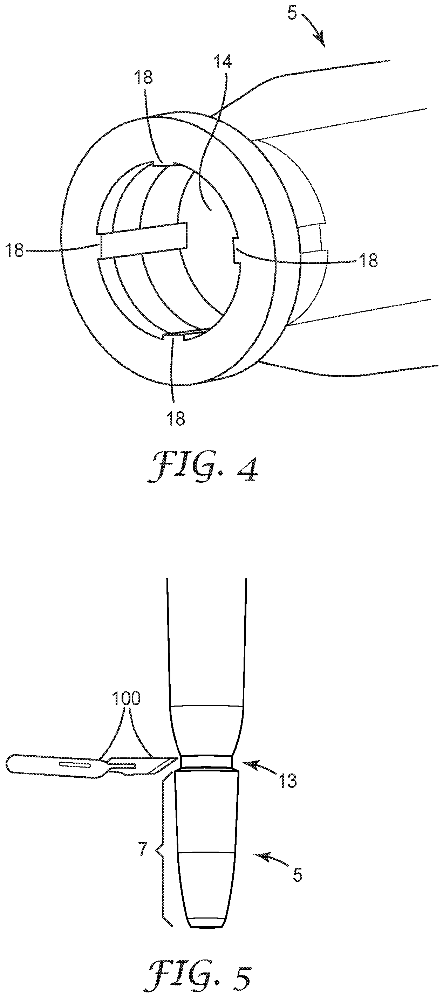

The cannula 5 in the example is provided with (optional) reinforcement structures 18 which are shown in more detail in Fig 4. The reinforcement structures 18 in the example are formed by elongated bulges that protrude into the channel 14. The bulges have an elongated length along the longitudinal axis A and are shorter transverse thereto. The protrusions extend radially inwardly from the inner surface of the channel 14. The reinforcement structures 18 support the wall between the inner surface of the channel 14 and the outer surface of the cannula 5 during cutting through the predetermined separation structure 13. Thus, a deformation of the cannula 5 (and restriction of the channel 14) due to a force exerted on the cannula 5 during cutting can be minimized.

Fig. 5 shows the cannula 5 and a scalpel 100. In the example the cannula 5 has an alternatively shaped predetermined separation structure 13, although the predetermined separation structure 13 of Fig. 3 may be likewise used. In the example, the scalpel 100 is positioned within the predetermined separation structure 13 and may be used for cutting off the first cannula portion 7 of the cannula 5.

## Claims

1. A dispensing device (1) for dental retraction material, comprising a cannula (5) forming a free front end (6), the free front end (6) being formed by a first cannula portion (7) that extends from the free front end (6) to a second cannula portion (8) that is arranged directly adjacent the first cannula portion (7), wherein the first cannula portion (7) has a first elongated section (9) and a first rounded section (10) extending between the first elongated section (9) and the free front end (6), a first outer diameter (D1) of the cannula (5) being defined on the first rounded section (10) at the free front end (6), wherein the second cannula portion (8) has a second elongated section (11) and a second rounded section (12) extending between the second elongated section (11) and the first cannula portion (7), a second outer diameter (D2) of the cannula (5) being defined on the second rounded section (12) at the transition between the second rounded section (12) and the first cannula portion (7), wherein the second outer diameter (D2) is greater than the first outer diameter (D1), and wherein the first cannula portion (7) comprises a predetermined separation structure (13) directly adjacent the second cannula portion (8), wherein the predetermined separation structure (13) is a groove, wherein a channel (14) extends through the cannula (5) and forms a dispensing opening (15) at the free front end (6), wherein the channel (14) comprises a first channel section (16) that has a first cylindrical channel section (16a) and a second channel section (17) that has a second cylindrical channel section (17a), wherein the first channel section (16) extends between the dispensing opening (15) and the second channel section (17), the first cylindrical channel section (16a) having a first channel diameter (C1) and the second cylindrical channel section (17a) having a second channel diameter (C2), wherein the first channel diameter (C1) is smaller than the second channel diameter (C2).

2. The dispensing device (1) of claim 1, wherein a third outer diameter (D3) of the cannula (5) being defined on the first elongated section (9) at the transition between the first rounded section (10) and the first elongated section (9), and wherein a fourth outer diameter (D4) of the cannula (5) being defined on the second elongated section (11) at the transition between the second rounded section (12) and the second elongated section (11).

3. The dispensing device (1) of claim 1, wherein the groove is V-shaped.

4. The dispensing device (1) of any of the preceding claims, wherein the first outer diameter (D1) is within a range of 0.5 mm to 0.8 mm and the second outer diameter (D2) is within a range of 0.8 mm to 1.0 mm.

5. The dispensing device (1) of any of the preceding claims, wherein the first rounded section (10) is based on a radius within a range of 0.5 mm to 10 mm and the second rounded section (12) is based on a radius within a range of 0.5 mm to 10 mm.

6. The dispensing device (1) of any of the preceding claims, wherein the first channel diameter (C1) is within a range of 0.5 mm to 0.8 mm and the second channel diameter (C2) is within a range of 0.8 mm to 1.0 mm.

7. The dispensing device (1) of claim 6, wherein the second channel section (17) comprises a third cylindrical channel section (17d) having a third channel diameter (C3) that is greater than the second channel diameter (C2).

8. The dispensing device (1) of claim 7, wherein the third channel diameter (C3) is within a range of 1.0 mm to 1.5 mm.

9. The dispensing device (1) of any of the preceding claims, further comprising a chamber for storing the dental retraction material, wherein the chamber is in fluid communication with the cannula (5).

10. The dispensing device (1) of any of the preceding claims, further comprising the dental retraction material.

11. The dispensing device (1) of any of the preceding claims, wherein a transition between the first cylindrical channel section (16a) and the second cylindrical channel (17a) section includes a chamfer (17c).

12. A method of preparing a dispensing device (1) for dental retraction material for use, excluding any steps for treatment of the human or animal body, the method comprising the steps of:
- providing a dispensing device (1) according to any of the preceding claims, in particular having a first and a second cannula portion (7, 8);
- separating the first cannula portion (7) by breaking or cutting the first cannula portion (7) off from the cannula (5) directly adjacent the second cannula portion (8).

## Patentansprüche

1. Eine Abgabevorrichtung (1) für dentales Retraktionsmaterial, aufweisend eine Kanüle (5), die ein freies vorderes Ende (6) ausbildet, wobei das freie vordere Ende (6) durch einen ersten Kanülenabschnitt (7) ausgebildet ist, der sich von dem freien vorderen Ende (6) zu einem zweiten Kanülenabschnitt (8) erstreckt, der direkt angrenzend an den ersten Kanülenabschnitt (7) angeordnet ist, wobei der erste Kanülenabschnitt (7) einen ersten länglichen Bereich (9) und einen ersten abgerundeten Bereich (10) aufweist, der sich zwischen dem ersten länglichen Bereich (9) und dem freien vorderen Ende (6) erstreckt, wobei ein erster Außendurchmesser (D1) der Kanüle (5) auf dem ersten abgerundeten Bereich (10) an dem freien vorderen Ende (6) definiert ist, wobei der zweite Kanülenabschnitt (8) einen zweiten länglichen Bereich (11) und einen zweiten abgerundeten Bereich (12) aufweist, der sich zwischen dem zweiten länglichen Bereich (11) und dem ersten Kanülenabschnitt (7) erstreckt, wobei ein zweiter Außendurchmesser (D2) der Kanüle (5) auf dem zweiten abgerundeten Bereich (12) an dem Übergang zwischen dem zweiten abgerundeten Bereich (12) und dem ersten Kanülenabschnitt (7) definiert ist, wobei der zweite Außendurchmesser (D2) größer als der erste Außendurchmesser (D1) ist, und wobei der erste Kanülenabschnitt (7) eine vorbestimmte Trennstruktur (13) aufweist, die direkt an den zweiten Kanülenabschnitt (8) angrenzt, wobei die vorbestimmte Trennstruktur (13) eine Nut ist, wobei sich ein Kanal (14) durch die Kanüle (5) erstreckt und eine Abgabeöffnung (15) an dem freien vorderen Ende (6) ausbildet, wobei der Kanal (14) einen ersten Kanalbereich (16), der einen ersten zylindrischen Kanalbereich (16a) aufweist, und einen zweiten Kanalbereich (17) aufweist, der einen zweiten zylindrischen Kanalbereich (17a) aufweist, wobei sich der erste Kanalbereich (16) zwischen der Abgabeöffnung (15) und dem zweiten Kanalbereich (17) erstreckt, wobei der erste zylindrische Kanalbereich (16a) einen ersten Kanaldurchmesser (C1) aufweist und der zweite zylindrische Kanalbereich (17a) einen zweiten Kanaldurchmesser (C2) aufweist, wobei der erste Kanaldurchmesser (C1) kleiner als der zweite Kanaldurchmesser (C2) ist.

2. Die Abgabevorrichtung (1) nach Anspruch 1, wobei ein dritter Außendurchmesser (D3) der Kanüle (5) auf dem ersten länglichen Bereich (9) an dem Übergang zwischen dem ersten abgerundeten Bereich (10) und dem ersten länglichen Bereich (9) definiert ist, und wobei ein vierter Außendurchmesser (D4) der Kanüle (5) auf dem zweiten länglichen Bereich (11) an dem Übergang zwischen dem zweiten abgerundeten Bereich (12) und dem zweiten länglichen Bereich (11) definiert ist.

3. Die Abgabevorrichtung (1) nach Anspruch 1, wobei die Nut V-förmig ist.

4. Die Abgabevorrichtung (1) nach einem der vorstehenden Ansprüche, wobei der erste Außendurchmesser (D1) innerhalb eines Bereichs von 0,5 mm bis 0,8 mm ist und der zweite Außendurchmesser (D2) innerhalb eines Bereichs von 0,8 mm bis 1,0 mm ist.

5. Die Abgabevorrichtung (1) nach einem der vorstehenden Ansprüche, wobei der erste abgerundete Bereich (10) auf einem Radius innerhalb eines Bereichs von 0,5 mm bis 10 mm basiert und der zweite abgerundete Bereich (12) auf einem Radius innerhalb eines Bereichs von 0,5 mm bis 10 mm basiert.

6. Die Abgabevorrichtung (1) nach einem der vorstehenden Ansprüche, wobei der erste Kanaldurchmesser (C1) innerhalb eines Bereichs von 0,5 mm bis 0,8 mm ist und der zweite Kanaldurchmesser (C2) innerhalb eines Bereichs von 0,8 mm bis 1,0 mm ist.

7. Die Abgabevorrichtung (1) nach Anspruch 6, wobei der zweite Kanalbereich (17) einen dritten zylindrischen Kanalbereich (17d) umfasst, der einen dritten Kanaldurchmesser (C3) aufweist, der größer als der zweite Kanaldurchmesser (C2) ist.

8. Die Abgabevorrichtung (1) nach Anspruch 7, wobei der dritte Kanaldurchmesser (C3) innerhalb eines Bereichs von 1,0 mm bis 1,5 mm ist.

9. Die Abgabevorrichtung (1) nach einem der vorstehenden Ansprüche, ferner aufweisend eine Kammer zum Aufbewahren des dentalen Retraktionsmaterials, wobei die Kammer in Fluidkommunikation mit der Kanüle (5) ist.

10. Die Abgabevorrichtung (1) nach einem der vorstehenden Ansprüche, ferner aufweisend das dentale Retraktionsmaterial.

11. Die Abgabevorrichtung (1) nach einem der vorstehenden Ansprüche, wobei ein Übergang zwischen dem ersten zylindrischen Kanalbereich (16a) und dem zweiten zylindrischen Kanalbereich (17a) eine Abschrägung (17c) einschließt.

12. Ein Verfahren zum Vorbereiten einer Abgabevorrichtung (1) für dentales Retraktionsmaterial zur Verwendung, ausgenommen jegliche Schritte für eine Behandlung des menschlichen oder des tierischen Körpers, das Verfahren aufweisend die Schritte:
- Bereitstellen einer Abgabevorrichtung (1) nach einem der vorstehenden Ansprüche, die insbesondere einen ersten und einen zweiten Kanülenabschnitt (7, 8) aufweist;
- Abtrennen des ersten Kanülenabschnitts (7) durch Abbrechen oder Abschneiden des ersten Kanülenabschnitts (7) von der Kanüle (5) direkt an den zweiten Kanülenabschnitt (8) angrenzend.

## Revendications

1. Dispositif de distribution (1) pour matériau de rétraction dentaire, comprenant une canule (5) formant une extrémité avant libre (6), l'extrémité avant libre (6) étant formée par une première partie de canule (7) qui s'étend de l'extrémité avant libre (6) jusqu'à une seconde partie de canule (8) qui est agencée directement à côté de la première partie de canule (7), dans lequel la première partie de canule (7) a une première section allongée (9) et une première section arrondie (10) s'étendant entre la première section allongée (9) et l'extrémité avant libre (6), un premier diamètre externe (D1) de la canule (5) étant défini sur la première section arrondie (10) au niveau de l'extrémité avant libre (6), dans lequel la seconde partie de canule (8) a une seconde section allongée (11) et une seconde section arrondie (12) s'étendant entre la seconde section allongée (11) et la première partie de canule (7), un deuxième diamètre externe (D2) de la canule (5) étant défini sur la seconde section arrondie (12) au niveau de la transition entre la seconde section arrondie (12) et la première partie de canule (7), dans lequel le deuxième diamètre externe (D2) est supérieur au premier diamètre externe (D1), et dans lequel la première partie de canule (7) comprend une structure de séparation prédéterminée (13) directement à côté de la seconde partie de canule (8), dans lequel la structure de séparation prédéterminée (13) est une rainure, dans lequel un canal (14) s'étend à travers la canule (5) et forme une ouverture de distribution (15) au niveau de l'extrémité avant libre (6), dans lequel le canal (14) comprend une première section de canal (16) qui a une première section de canal cylindrique (16a) et une seconde section de canal (17) qui a une deuxième section de canal cylindrique (17a), dans lequel la première section de canal (16) s'étend entre l'ouverture de distribution (15) et la seconde section de canal (17), la première section de canal cylindrique (16a) ayant un premier diamètre de canal (C1) et la deuxième section de canal cylindrique (17a) ayant un deuxième diamètre de canal (C2), dans lequel le premier diamètre de canal (C1) est plus petit que le deuxième diamètre de canal (C2).

2. Dispositif de distribution (1) selon la revendication 1, dans lequel un troisième diamètre externe (D3) de la canule (5) est défini sur la première section allongée (9) au niveau de la transition entre la première section arrondie (10) et la première section allongée (9), et dans lequel un quatrième diamètre externe (D4) de la canule (5) est défini sur la seconde section allongée (11) au niveau de la transition entre la seconde section arrondie (12) et la seconde section allongée (11).

3. Dispositif de distribution (1) selon la revendication 1, dans lequel la rainure est en forme de V.

4. Dispositif de distribution (1) selon l'une quelconque des revendications précédentes, dans lequel le premier diamètre externe (D1) est dans une plage de 0,5 mm à 0,8 mm et le deuxième diamètre externe (D2) est dans une plage de 0,8 mm à 1,0 mm.

5. Dispositif de distribution (1) selon l'une quelconque des revendications précédentes, dans lequel la première section arrondie (10) est fonction d'un rayon dans une plage de 0,5 mm à 10 mm et la seconde section arrondie (12) est fonction d'un rayon dans une plage de 0,5 mm à 10 mm.

6. Dispositif de distribution (1) selon l'une quelconque des revendications précédentes, dans lequel le premier diamètre de canal (C1) est dans une plage de 0,5 mm à 0,8 mm et le deuxième diamètre de canal (C2) est dans une plage de 0,8 mm à 1,0 mm.

7. Dispositif de distribution (1) selon la revendication 6, dans lequel la seconde section de canal (17) comprend une troisième section de canal cylindrique (17d) ayant un troisième diamètre de canal (C3) qui est supérieur au deuxième diamètre de canal (C2).

8. Dispositif de distribution (1) selon la revendication 7, dans lequel le troisième diamètre de canal (C3) est dans une plage de 1,0 mm à 1,5 mm.

9. Dispositif de distribution (1) selon l'une quelconque des revendications précédentes, comprenant en outre une chambre destinée à stocker le matériau de rétraction dentaire, dans lequel la chambre est en communication fluidique avec la canule (5).

10. Dispositif de distribution (1) selon l'une quelconque des revendications précédentes, comprenant en outre le matériau de rétraction dentaire.

11. Dispositif de distribution (1) selon l'une quelconque des revendications précédentes, dans lequel une transition entre la première section de canal cylindrique (16a) et la deuxième section de canal cylindrique (17a) comporte un chanfrein (17c).

12. Procédé de préparation d'un dispositif de distribution (1) pour matériau de rétraction dentaire utilisable, excluant l'une quelconque des étapes de traitement du corps humain ou animal, le procédé comprenant les étapes consistant à :
- fournir un dispositif de distribution (1) selon l'une quelconque des revendications précédentes, en particulier ayant une première et une seconde partie de canule (7, 8) ;
- séparer la première partie de canule (7) en cassant ou en découpant la première partie de canule (7) de la canule (5) directement à côté de la seconde partie de canule (8).
